# EUROPÄISCHE PATENTSCHRIFT

(11) **EP 2 534 730 B1**
(45) Veröffentlichungstag und Bekanntmachung des Hinweises auf die Patenterteilung: **07.09.2016**
(21) Anmeldenummer: 10787807.6
(22) Anmeldetag: 14.12.2010
(51) Int. Cl.: H01Q 3/22, H01Q 25/00, H01Q 21/08, H01Q 1/32, G01S 7/03, G01S 13/34, G01S 13/93, G01S 13/42

(54) **RADARSENSOR**
RADAR SENSOR
DÉTECTEUR RADAR

(30) Priorität: 10.02.2010 DE 102010001761
(43) Veröffentlichungstag der Anmeldung: 19.12.2012
(73) Patentinhaber: Robert Bosch GmbH, 70442 Stuttgart (DE)
(72) Erfinder: HILSEBECHER, Joerg, 31135 Hildesheim (DE); LANGE, Oliver, Hannover 30171 (DE); MESCHENMOSER, Reinhard, 30459 Hannover (DE); ZENDER, Arne, 31162 Bad Salzdetfurth (DE); SCHOEBERL, Thomas, 31139 Hildesheim (DE); HANSEN, Thomas, 31139 Hildesheim (DE); SCHNEIDER, Karl, 71576 Burgstetten (DE)
(86) Internationale Anmeldenummer: PCT/EP2010/069578
(87) Internationale Veröffentlichungsnummer: WO 2011/098173

(56) Entgegenhaltungen:
- DE-A1-102006 032 540
- US-A- 2 810 905
- US-A- 4 864 308
- Irving W. Hammer: "Frequency-scanned Arrays" In: Merrill I. Skolnik: "Radar Handbook", 1. Januar 1970 (1970-01-01), Mc Graw-Hill, New York, XP002618616, ISBN: 0-07-057908-3 Seiten 13-1-13-27, Absätze [13.1], [13.4]; Abbildung 12
- MAYER W ET AL: "A novel direct-imaging radar sensor with frequency scanned antenna", 2003 IEEE MTT-S INTERNATIONAL MICROWAVE SYMPOSIUM DIGEST.(IMS 2003). PHILADELPHIA, PA, JUNE 8 - 13, 2003; [IEEE MTT-S INTERNATIONAL MICROWAVE SYMPOSIUM], NEW YORK, NY : IEEE, US, Bd. 3, 8. Juni 2003 (2003-06-08), Seiten 1941-1944, XP010746708, DOI: DOI:10.1109/MWSYM.2003.1210538 ISBN: 978-0-7803-7695-3
- VAN CAEKENBERGHE K ET AL: "A 94 GHz OFDM Frequency Scanning Radar for Autonomous Landing Guidance", RADAR CONFERENCE, 2007 IEEE, IEEE, PI, 17. April 2007 (2007-04-17), Seiten 248-253, XP031214565, ISBN: 978-1-4244-0283-0

## Beschreibung

Die Erfindung betrifft einen Radarsensor mit einer Antennenanordnung, die mehrere nebeneinander angeordnete Antennenelemente und mindesten einen Einspeisepunkt an einem äußeren Antennenelement aufweist. Die Antennenelemente sind über Verzögerungsstrecken seriell miteinander verbunden.

### Stand der Technik

Radarsensoren werden zunehmend in Kraftfahrzeugen zur Bestimmung von Abständen und Relativgeschwindigkeiten zu vorausfahrenden Fahrzeugen eingesetzt. Sie machen Abstandswarnungen oder eine abstandsbasierte automatische Geschwindigkeitskontrolle (ACC - Adaptive Cruise Control) möglich.

Antennenanordnungen der genannten Art, die auch als Phased-Array Antennen bezeichnet werden, haben eine starke Richtwirkung und erlauben so den Aufbau von winkelaufgelösten Radarsensoren. Die Verzögerungsstrecken bedingen Phasenverschiebungen zwischen den von den einzelnen hintereinandergeschalteten Antennenelementen abgestrahlten Wellen. Die Antennenanordnungen sind so ausgelegt, dass bei der von dem Radarsensor benutzten Radarfrequenz, z.B. im Bereich von 76 Gigaherz (GHz), konstruktive und destruktive Interferenz der abgestrahlten Wellen zu einer keulenförmige Richtcharakteristik des von der Antennenanordnung abgestrahlten Radarfeldes führt. Durch eine Variation der Sende- bzw. Empfangsfrequenz kann die ausgebildete Richtkeule verschwenkt werden.

Durch Frequenzvariation kann somit Information über vorausfahrende Fahrzeuge winkelaufgelöst gewonnen werden. Der vor einem Kraftfahrzeug liegende Bereich kann entsprechend winkelaufgelöst abgetastet ("gescannt") werden. Allerdings sind die Scanzeiten durch das Verschwenken der Richtkeulen über den gesamten Betrachtungswinkel groß. Zudem wird das Umfeld zu einem bestimmten Zeitpunkt nur jeweils an einem einzelnen Schwenkwinkel der Breite der Richtkeule erfasst.

Irving W. Hammer, "Frequency-scanned arrays", in: Merrill I. Skolnik: "Radar Hand-book", 1. Januar 1970, Mc Graw-Hill, New York, XP2618616 beschreibt eine Antennenordnung mit mehreren in einer Reihe angeordneten Abstrahleinrichtungen, die mit Verzögerungsstrecken seriell miteinander verbunden sind. Die Antennenanordnung weist einen äußeren Einspeisepunkt auf. Weiter wird die Erzeugung mehrerer Signalpulse unterschiedlicher Frequenz beschrieben, wobei das Empfangssignal in unabhängigen Schmalbandverstärkern verstärkt wird, die jeweils auf die abgestrahlten Frequenzen abgestimmt sind. Es handelt sich um ein herkömmliches Pulsradar, bei dem während der Laufzeit eines Pulses auf Echos gewartet wird.

US 2 810 905 A beschreibt ein Pulsradarsystem, bei dem nach einander verschiedene Frequenzen ausgesandt werden.

US 4 864 308 A beschreibt ein Radiometer. Frequenzen von an entgegengesetzten Enden der Antenne angeschlossenen Empfangseinheiten sind miteinander so gekoppelt, dass beide für die gleiche Richtung sensitiv sind.

W. Mayer et al., "A novel direct-imaging radar sensor with frequency scanned antenna", 2003 IEEE MTT-S International Microwave Symposium Digest, New York, Bd. 3, 8. Juni 2003, Seiten 1941-1944, XP10746708 beschreibt ein FMCW-Radar mit einer frequenzgescannten Antenne.

Aus der Druckschrift DE 10 2006 032 540 A1 ist ein Radarsensor bekannt, bei dem mehrere unabhängige Antennen vorgesehen sind. Die Antennen sind versetzt in Bezug auf eine optische Achse einer gemeinsamen Radarlinse angeordnet. Jede einzelne Antenne weist eine vorgegebene Richtcharakteristik auf, wobei durch die Anordnung der einzelnen Antennen und die gemeinsame Radarlinse die Antennen verschiedene Winkelbereiche abdecken. Auf diese Weise ist eine gleichzeitige winkelaufgelöste Erfassung verschiedener Winkelbereiche möglich, wobei der Radarsensor jedoch durch die Verwendung unabhängiger Antennen und der Radarlinse mechanisch aufwendig aufgebaut ist und die Winkelbereiche nicht ohne weiteres verändert werden können.

Es ist daher eine Aufgabe der vorliegenden Erfindung, einen winkelauflösenden Radarsensor zu schaffen, der bei einfachem mechanischen Aufbau die Möglichkeit bietet, gleichzeitig mehrere Winkelbereiche zu erfassen und die erfassten Winkelbereiche auf einfache Art verschwenken zu können.

### Offenbarung der Erfindung

Diese Aufgabe wird durch einen Radarsensor mit den Merkmalen des unabhängigen Anspruchs gelöst. Vorteilhafte Ausgestaltungen der Erfindung ergeben sich aus den abhängigen Ansprüchen.

Der Radarsensor der eingangs genannten Art mit einer Antennenanordnung mit mehreren nebeneinander angeordneten Antennenelementen die über Verzögerungsstrecken seriell miteinander verbundenen sind, weist erfindungsgemäß mindestens zwei Sende- und Empfangseinheiten auf, von denen jede geeignet ist, ein Radarsignal bei einer vorgegebenen Frequenz zu erzeugen und auszuwerten. Die Sende- und Empfangseinheiten sind für die FMCW-Betriebsart ausgebildet. Die mindestens zwei Sende- und Empfangseinheiten sind mit einem Einspeisepunkt der Antennenanordnung verbunden. Die Frequenzen der superponierbaren Radarsignale der mindestens zwei Sende- und Empfangseinheiten sind unabhängig voneinander vorgebbar.

Als Folge der Ausgestaltung der Antennenanordnung mit nebeneinander angeordneten Antennenelementen und zwischen diesen liegenden Verzögerungsstrecken führt jedes der Radarsignale einer Sende- und Empfangseinheit zur Abstrahlung eines gerichteten Radarfeldes. Die Richtung wird von der Frequenz des Radarsignals der jeweiligen Sende- und Empfangseinheit bestimmt. Insgesamt entsteht durch Superposition der Einzelsignale einer jeden Sende- und Empfangseinheit 20 so ein Radarfeld, das sich aus der Überlagerung von mindestens zwei gerichteten Radarfeldern zusammensetzt. Somit können mindestens zwei - bei mehreren Sende- und Empfangseinheiten auch mehrere - Winkelbereiche gleichzeitig erfasst werden. Die Winkelbereiche können zudem auf einfache Weise durch Variation der Frequenzen verschwenkt werden. Die Ausgestaltung der Antennenanordnung als Phased-Array Antenne erlaubt zudem einen einfachen mechanischen Aufbau.

### Zeichnungen

Die Erfindung wird nachfolgend anhand von Ausführungsbeispielen mit Hilfe von fünf Figuren näher erläutert.

Es zeigt:
- Fig. 1: ein erstes Ausführungsbeispiel eines Radarsensors mit einer Steuereinrichtung,
- Fig. 2: eine Sende- und Empfangseinheit zur Verwendung in einem Radarsensor,
- Fig. 3: ein zweites Ausführungsbeispiel eines Radarsensors mit einer Steuereinrichtung,
- Fig. 4: ein Diagramm der Zeitabhängigkeit von Sende- und Empfangsfrequenzen bei einem Radarsensor und
- Fig. 5: ein Diagramm der Abstrahlcharakteristik eines Radarsensors.

### Beschreibung der Ausführungsbeispiele

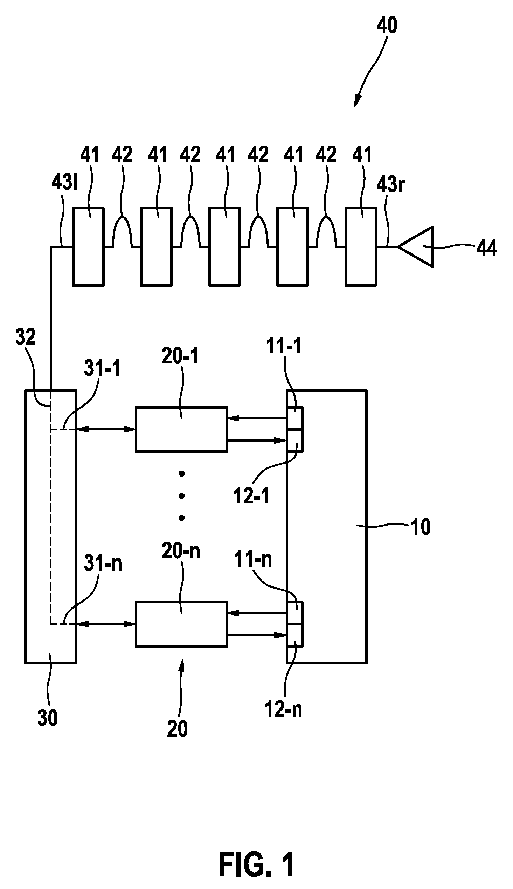

Fig. 1 stellt ein Radarsystem mit einem Radarsensor und einer Steuereinrichtung schematisch dar.

Das Radarsystem weist eine Steuereinrichtung 10 und einen Radarsensor, umfassend mehrere Sende- und Empfangseinheiten 20, einen Verteiler 30 und eine Antennenanordnung 40 auf. Die Steuereinrichtung 10 weist Steuerausgänge 11 und Zwischenfrequenz (ZF)-Signaleingänge 12 auf, mit denen die Steuereinrichtung 10 mit den Sende- und Empfangseinheiten 20 verbunden ist. Weiter ist jede der Sende- und Empfangseinheiten 20 an einen Hochfrequenz (HF)-Ein- und Ausgang 31 des Verteilers 30 angeschlossen. Der Verteiler 30 hat zudem einen Antennenanschluss 32 zur Verbindung mit der Antennenanordnung 40. Die Antennenanordnung 40 umfasst mehrere, nebeneinander angeordnete Antennenelemente 41, von denen jeweils benachbarte Antennenelemente 41 über eine Verzögerungsstrecke 42 miteinander verbunden sind. Die äußeren beiden Antennenelemente 41 der auf diese Weise gebildeten linearen, kettenförmigen Anordnung sind mit Einspeisepunkten 43l und 43r verbunden, von denen einer, der Einspeisepunkt 43l, den Antennenanschluss 32 des Verteilers 30 kontaktiert und der andere, der Einspeisepunkt 43r, mit einem Abschlusselement 44, auch Terminator genannt, abgeschlossen ist.

Bei dem Radarsystem gemäß Fig. 1 sind für den Radarsensor eine Mehrzahl n von Sende- und Empfangseinrichtungen 20 vorgesehen. Aus Gründen der Übersichtlichkeit sind beispielhaft nur zwei Sende- und Empfangseinrichtungen 20-1 und 20-n eingezeichnet. Entsprechend der Anzahl n von Sende- und Empfangseinheiten 20 weist die Steuereinrichtung 10 eine Anzahl von n Paaren an Steuerausgängen 11 und ZF-Signaleingängen 12 auf und der Verteiler 30 weist eine Anzahl n von HF-Ein- und Ausgängen 31 auf. Über die einzelnen Steuerausgänge 11-1 bis 11-n kann von der Steuereinrichtung 10 die Frequenz einer jeden Sende und Empfangseinheit 20-1 bis 20-n unabhängig voneinander eingestellt werden. Über den Verteiler 30 werden die von den Sende- und Empfangseinheiten 20 generierten Radarhochfrequenzsignale in die Antennenanordnung 40 eingespeist. Als Folge der Ausgestaltung der Antennenanordnung 40 als Phased-Array mit den Verzögerungsstrecken 42 führt jedes der Hochfrequenzsignale einer Sende- und Empfangseinheit 20 zur Abstrahlung eines Radarsignals mit bestimmter, von der Frequenz der jeweiligen Sende- und Empfangseinheit 20 abhängigen Abstrahlrichtung.

Insgesamt entsteht durch Superposition der Einzelsignale einer jeden Sende- und Empfangseinheit 20 so ein Radarfeld, das sich aus der Überlagerung von n Abstrahlkeulen zusammensetzt. Jede der Sende- und Empfangseinheiten 20 ist zudem dazu ausgelegt, Radarsignale bei der eigenen Sendefrequenz zu empfangen. Bei entsprechender Frequenzselektion im Empfangskreis der Sende- und Empfangseinheiten 20 weist die Antennenanordnung 40 die gleiche Richtcharakteristik für das Senden und das Empfangen von Signalen auf. Dieses führt zu einer weiteren Erhöhung der Winkelsensitivität der Einzelsignale.

Die Antennenelemente 41 der Antennenanordnung 40 können beispielsweise planare Elemente sein, die quer, bevorzugt senkrecht, zur Fahrtrichtung des Autos nebeneinander vertikal angeordnet sind, sodass die Richtkeulen parallel zur Fahrbahnoberfläche nach vorne weisen. Ein Verschwenken der Richtkeulen geschieht in der Ebene, die durch die Oberflächennormale der planaren Antennenelemente 41 und die Richtung, in der die Antennenelemente 41 nebeneinander angeordnet sind, aufgespannt wird. Somit wird ein Verschwenken in einer horizontalen Ebene nach links und rechts zur Gegenfahrbahn beziehungsweise zum Fahrbahnrand hin möglich.

Als Verteiler 30 können beispielsweise so genannte Wilkinson-Hochfrequenzverteiler eingesetzt werden. Grundsätzlich kann jede beliebige HF-Summations- und Teilerschaltung benutzt werden, solange sie möglichst linear arbeitet, so dass keine zusätzlichen, eventuell störenden Frequenzbänder durch nichtlineare Effekte in das Radarsystem eingebracht werden.

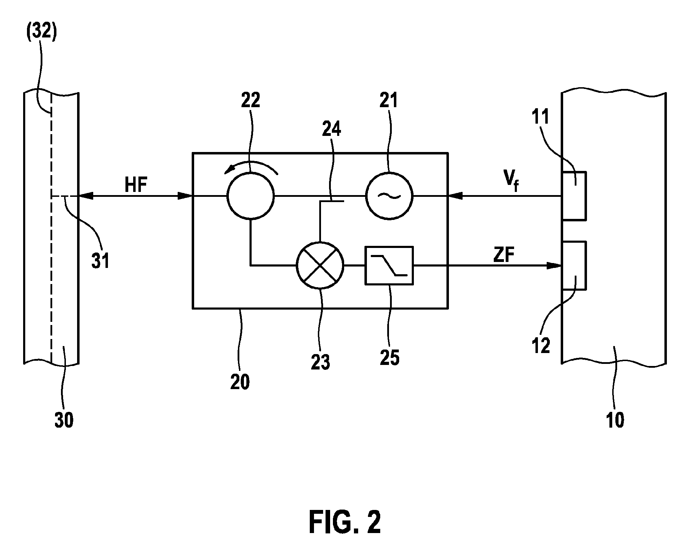

Fig. 2 zeigt eine für das Ausführungsbeispiel der Fig. 1 geeignete Ausgestaltung einer Sende- und Empfangseinheit 20 detaillierter. In allen Abbildungen kennzeichnen Bezugszeichen gleiche oder gleich wirkende Elemente.

Die Sende- und Empfangseinheit 20 weist einen Generator 21 zur Erzeugung eines HF-Signals auf. Die Frequenz f des HF-Signals kann über ein Steuersignal V_{f} Frequenz variiert werden. Das die Frequenz bestimmende Signal V_{f} wird von dem Steuerausgang 11 der Steuereinrichtung 10 als analoges oder digitales Signal bereitgestellt. Die Sende- und Empfangseinheit 20 weist weiter einen Zirkulator 22 auf, der das HF-Signal des HF-Generator 21 über einen Ausgang an den HF-Ein- und Ausgang 31 des Verteilers 30 weiterleitet, von dem aus es der hier nicht gezeigten Antennenordnung 40 zugeführt wird.

Ein von einem Objekt reflektiertes und über die Antennenordnung 40 und den Verteiler 30 empfangenes und zurückgegebenes HF-Signal wird über den gleichen Anschluss wiederum dem Zirkulator 22 zugeführt, der es an einen Mischer 23 weitergibt. Im Mischer 23 wird das empfangene HF-Signal mit dem vom Generator 21 erzeugten und an einen Abgriff 24 abgegriffenen und dem Mischer zugeführten HF-Signal gemischt. Das resultierende Mischsignal enthält ein Signal auf einer kleineren Frequenz als die Hochfrequenz, das über die Dopplerverschiebung Informationen über die Relativgeschwindigkeit des reflektierenden Objekts enthält. Das gemischte Signal wird über einen Tiefpassfilter 25, der eventuell enthaltene höherfrequente Signale unterdrückt, als Zwischenfrequenz (ZF)-Signal an den ZF-Signaleingang 12 der Steuereinrichtung 10 weitergegeben.

Hochfrequenzsignalanteile im gemischten Signal können beispielsweise durch reflektierte Sendesignale anderer Sende- und Empfangseinheiten 20, die auf einer anderen Frequenz als die betrachtete Sende- und Empfangseinheit 20 abstrahlen, herrühren. Die (Nieder-) Frequenzfilterung im gemischten Signal entspricht einer Frequenzselektion im HF-Signalweg der Sende- und Empfangseinheit 20. Auf diese Weise wird eine HF-Selektivität der Sende- und Empfangseinheit 20 erreicht, die zu einer Richtcharakteristik auch für empfangene Signale führt.

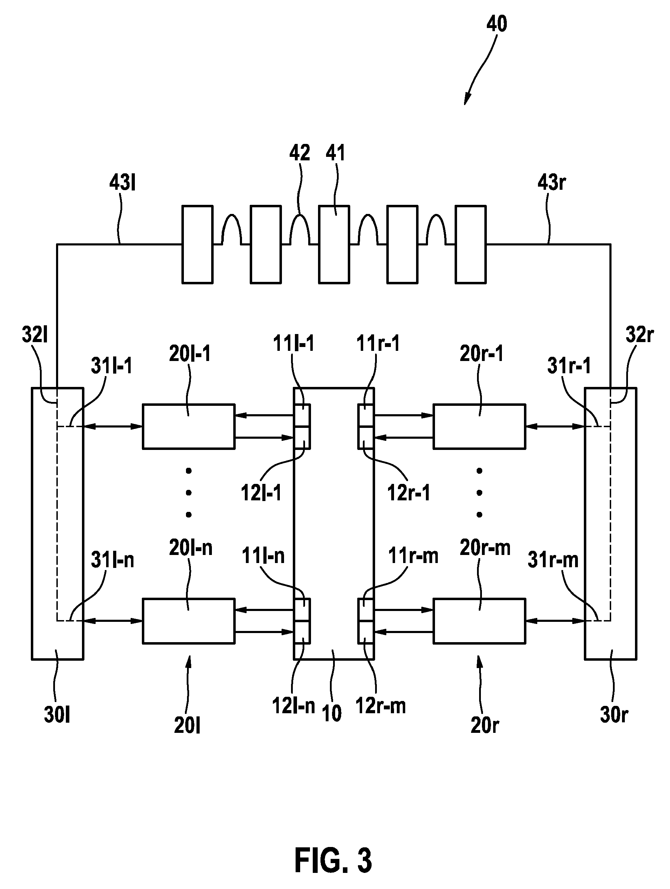

Fig. 3 zeigt ein zweites Ausführungsbeispiel eines Radarsystems mit einer Steuereinrichtung und einem Radarsensor.

Grundsätzlich ist der Aufbau analog zu dem in Fig. 1 gezeigten Ausführungsbeispiel. Im Unterschied zu dem Radarsensor aus Fig. 1 ist beim Ausführungsbeispiel der Fig. 3 der Einspeisepunkt 43r der Antennenanordnung 40 nicht mit einem Terminator abgeschlossen, sondern mit einem weiteren Verteiler 30 verbunden, der ebenfalls den Anschluss von Sende- und Empfangseinrichtungen 20 ermöglicht. Zur Unterscheidung der in diesem Ausführungsbeispiel eingesetzten Verteiler 30 und jeweils mit diesen Verteilern 30 verbundenen Sende- und Empfangseinrichtungen 20 werden Indizes I (links) und r (rechts) benutzt, wobei alle mit dem Index I versehenen Elemente auf den linken Einspeisepunkt 43l und alle mit dem Index r versehenen Elemente auf den rechten Einspeisepunkt 43r einwirken.

Im Ausführungsbeispiel der Fig. 3 ist eine Anzahl von n Sende- und Empfangseinheiten 201-1 bis 20l-n vorgesehen und eine Anzahl von m Sende- und Empfangseinrichtungen 20r-1 bis 20r-m. Die Verteiler 30l und 30r weisen eine entsprechende Anzahl von HF-Ein- und Ausgängen 31l-1 bis 31l-n sowie 31 r-1 bis 31r-m auf. Gleiches gilt für die Steuerausgänge 11 und die Zwischenfrequenzeingänge 12 der Steuereinrichtung 10. Eine Anordnung wie in Fig. 3 gezeigt kann insbesondere dann Vorteile haben, wenn die Gesamtzahl n+m der vorgesehenen Sende- und Empfangseinrichtungen 20 groß ist und ein einzelner Verteiler 30 mit einer entsprechenden Anzahl von HF-Ein- und Ausgängen 31 eine zu hohe Dämpfung aufweisen würde. Das grundsätzliche Funktionsprinzip der Anordnung in Fig. 1 und Fig. 3 unterscheidet sich dabei jedoch nicht. Insbesondere können als Sende- und Empfangseinheiten 20l und 20r auch beim Ausführungsbeispiel der Fig. 3 die in Fig. 2 näher beschriebenen Sende- und Empfangseinheiten eingesetzt werden.

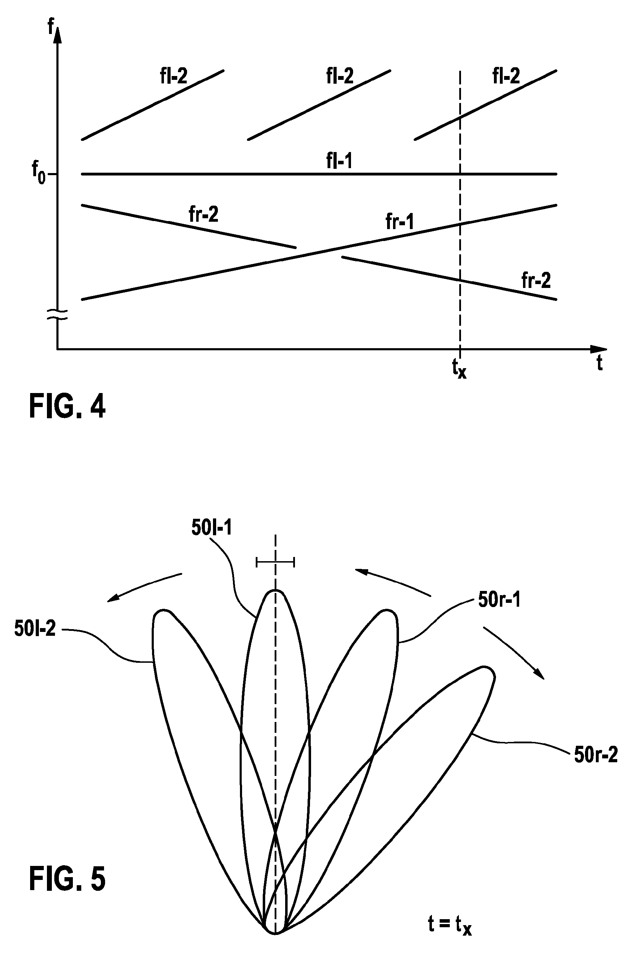

Im Folgenden wird im Zusammenhang mit den Figuren 4 und 5 die Funktionsweise eines Radarsensors mit mehreren Sende- und Empfangseinheiten 20 erläutert. Beispielhaft wird ein Radarsensor wie im Ausführungsbeispiel der Fig. 3 angegeben zugrunde gelegt, bei dem jeweils zwei Sende- und Empfangseinheiten 20l beziehungsweise 20r an den beiden Verteilern 30l beziehungsweise 30r betrieben werden (n = m = 2).

Fig. 4 ist ein schematisches Diagramm, das die Frequenz f der abgegebenen HF-Signale der Sende- und Empfangseinheiten als Funktion der Zeit t in einem Ausführungsbeispiel eines Radarsensors darstellt. Dabei werden die Frequenzen f der Sende- und Empfangseinheiten 201-1, 20l-2, 20r-1 und 20r-2 als fl-1, fl-2, fr-1 und fr-2 bezeichnet. Die an der Frequenzachse markierte Frequenz f₀ kennzeichnet die Frequenz, bei der die Antennenanordnung 40 in einer Richtung senkrecht zu der Richtung, in der die Antennenelemente 41 angeordnet sind, abstrahlt. Diese Richtung wird im Folgenden auch als Grundrichtung bezeichnet.

Wie in Fig. 4 zu sehen ist, wird die Sende- und Empfangseinheit 201-1 mit einer konstanten Frequenz fl-1 gleich f₀ betrieben wohingegen sich die übrigen Sendeund Empfangseinheiten 20l-2, 20r-1 und 20r-2 mit sich abschnittsweise linear ändernden Frequenzen betrieben werden. Die Frequenzänderungen sind im gezeigten Beispiel periodisch, wie dem sägezahnartigen Verlauf der Frequenz fl-2 ersichtlich ist. Die Periodenlänge kann für die verschiedenen Sende- und Empfangseinheiten 20 unterschiedlich gewählt sein. Auch ist denkbar, dass eine oder mehrere der Frequenzen abhängig von einem detektierten Objekt geändert werden, zum Beispiel, um dieses im Beobachtungsbereich zu halten (Object Tracking).

In Fig. 5 ist die Gesamtrichtcharakteristik des Radarsensors, die sich aus der Überlagerung der vier den vier Sende- und Empfangseinheiten 20 zugeordneten Richtkeulen 50 ergibt, als Momentaufnahme zu einem Zeitpunkt t = tₓ, der in Fig. 4 als gestrichelte Linie eingetragen ist, dargestellt. Die Pfeile an den Enden der Richtkeulen 50 in Fig. 5 symbolisieren dabei die aktuelle Bewegungsrichtung der Richtkeulen 50. Eine gegenüber der Frequenz f₀ kleinere Frequenz führt zu einer nach rechts aus der Grundrichtung heraus geschwenkten Richtkeule, wohingegen eine Frequenz größer als die Frequenz f₀ zu einer nach links weg geschwenkten Richtkeule führt.

Zum Zeitpunkt t = tₓ ergibt sich folglich die dargestellte Gesamtrichtcharakteristik als Überlagerung der Richtkeule 501-1, die zeitlich unverändert mit ihrer Hauptstrahlrichtung entlang der Grundrichtung ausgerichtet ist, der Richtkeule 50l-2, die nach links geschwenkt ist und sich weiter in diese Richtung bewegt, der Richtkeule 50r-1, die leicht nach rechts geschwenkt ist und sich nach links bewegt sowie der Richtkeule 50r-2, die nach rechts geschwenkt ist und weiter in diese Richtung schwenkt. Mit der gezeigten Anordnung kann vorteilhaft permanent ein zentral nach vorne gerichteter, also in Fahrtrichtung weisender Winkelbereich über die Richtkeule 501-1 beobachtet werden und gleichzeitig mit der beweglichen Richtkeule 50l-2 der entgegenkommende Verkehr, sowie mit den weiteren beweglichen Richtkeulen 50r-1 und 50r-2 der Fahrbahnrand abgetastet werden. Die gleichzeitige Abtastung ermöglicht eine kontinuierliche Beobachtung relevanter Winkelbereiche bei gleichzeitig guter Winkelauflösung.

Bei Radarsystemen mit konstanter Frequenz und kontinuierlicher, nicht gepulster Abstrahlung enthält ein durch ein Objekt reflektiertes Signal zunächst nur Informationen über die Geschwindigkeit des reflektierenden Objekts. Zur Ermittlung von Abstandsinformationen wird Information über die Signallaufzeit benötigt, die z.B. anhand von gepulsten Radarsignalen gewonnen werden kann. Bei kontinuierlich ausstrahlenden Radarsystemen kann eine Laufzeitinformation über eine Frequenzmodulation gewonnen werden (FMCW-Frequency Modulated Continuous Wave). Bei den im Rahmen der Anmeldung vorgestellten winkelaufgelösten Radarsensoren kann eine zur Winkelvariation eingesetzte periodische Frequenzänderung gleichzeitig benutzt werden, um Abstandsinformationen aus dem reflektierten Radarsignal zu gewinnen. Dazu ist es erforderlich, das empfangene Radarsignal über zumindest zwei Perioden der Frequenzänderung auszuwerten.

Alternativ ist es möglich, eine zusätzliche, z.B. rampen- oder sägezahnförmige Frequenzmodulation über das zur Winkelvariation frequenzvariierte Signal zu legen. Eine solche Modulation kann dabei einen kleineren Frequenzhub aufweisen als die Frequenzvariation zur Winkelvariation und eine kleinere Periodenlänge haben.

In den gezeigten Ausführungsbeispielen kann eine Weiterverarbeitung der an den Zwischenfrequenzsignaleingängen 12 der Steuereinrichtung 10 empfangenen Signale vorteilhaft über Analog/Digital-Wandler und nachfolgende Frequenzanalyse, zum Beispiel durch eine schnelle Fourier-Transformation (FFT-Fast Fourier Transform) erfolgen.

In den obigen Ausführungsbeispielen ist die Steuereinrichtung 10 nicht Teil des Radarsensors. Sie kann jedoch ebenso als ein integraler Teil des Radarsensors ausgeführt sein.

Neben den gezeigten Sende- und Empfangseinrichtungen 20, die über die Mischer 23 das Hochfrequenzsignal direkt auf ein Zwischenfrequenzsignal abbilden, ist ebenso der Einsatz von Superhet-Empfängern möglich, die sich zusätzlich einer Abbildung auf eine weitere Zwischenfrequenzstufe bedienen.

## Patentansprüche

1. Radarsensor, aufweisend
- eine Antennenanordnung (40) mit mehreren nebeneinander angeordneten Antennenelementen (41), die über Verzögerungsstrecken (42) seriell miteinander verbundenen sind, und mindestens einem Einspeisepunkt (43l, 43r) an einem äußeren Antennenelement (41), und
- mindestens zwei Sende- und Empfangseinheiten (20), jeweils zum Erzeugen und Auswerten eines Radarsignals bei einer vorgegebenen Frequenz,
wobei
- die Sende- und Empfangseinheiten (20) für die FMCW-Betriebsart ausgebildet sind,
- die mindestens zwei Sende- und Empfangseinheiten (20) mit dem mindestens einen Einspeisepunkt (43l, 43r) der Antennenanordnung (40) verbunden sind und
- die Frequenzen der superponierbaren Radarsignale der mindestens zwei Sende- und Empfangseinheiten (20) unabhängig voneinander vorgebbar sind.

2. Radarsensor nach Anspruch 1, bei dem die mindestens zwei Sende- und Empfangseinheiten (20) über einen Verteiler (30) permanent mit der Antennenanordnung (40) verbunden sind.

3. Radarsensor nach Anspruch 2, bei dem der Verteiler (30) ein Wilkinson Hochfrequenz-Verteiler ist.

4. Radarsensor nach Anspruch 2, bei dem der Verteiler (30) ein Hybrid Hochfrequenz-Verteiler ist.

5. Radarsensor nach einem der Ansprüche 1 bis 4, bei dem die Antennenanordnung (40) zwei Einspeisepunkte (43l, 43r) aufweist, wobei alle Sende- und Empfangseinheiten (20) mit einem der Einspeisepunkte (43l, 43r) verbunden sind und der andere Einspeisepunkt (43r, 43l) mit einem Abschlusselement (44) terminiert ist.

6. Radarsensor nach einem der Ansprüche 1 bis 4, bei dem die Antennenanordnung (40) zwei Einspeisepunkte (43l, 43r) und zwei Verteiler (30l, 30r) aufweist, wobei je einer der zwei Verteiler (30l, 30r) mit einem der Einspeisepunkte (43l, 43r) und mit mindestens einer Sende- und Empfangseinheit (20) verbunden ist.

7. Radarsensor nach einem der Ansprüche 1 bis 6, bei dem die Verzögerungsstrecken (42) so ausgelegt sind, dass ein von der Antennenanordnung (42) abgestrahltes Radarsignal gerichtet ist, wobei die Hauptstrahlrichtung von der Frequenz des Radarsignals abhängt.

8. Radarsensor nach einem der Ansprüche 1 bis 7, bei dem jede der Sende- und Empfangseinheiten (20) einen Hochfrequenz-Generator (21) zur Erzeugung des Radarsignals aufweist und bei dem ein empfangenes Radarsignal zu dessen Auswertung mit dem von dem Hochfrequenz-Generator (21) erzeugten Signal gemischt wird.

9. Radarsensor nach einem der Ansprüche 1 bis 8, bei dem eine Sende- und Empfangseinheit (20) mit einer konstanten Frequenz betreibbar ist.

10. Radarsensor nach einem der Ansprüche 1 bis 9, bei dem das Radarsignal von zumindest einer Sende- und Empfangseinheit (20) zur Änderung der Hauptstrahlrichtung und/oder zur Abstandsbestimmung frequenzmoduliert ist.

11. Radarsensor nach Anspruch 10, bei dem die Frequenzmodulation eine rampen- oder sägezahlförmigen Modulation ist, die der Änderung der Hauptstrahlrichtung und der Abstandsbestimmung dient.

12. Radarsensor nach Anspruch 10, bei dem die Frequenzmodulation sich aus einer ersten und einer zweiten rampen- oder sägezahlförmigen Modulation zusammensetzt, die sich in ihrem Frequenzhub und/oder ihrer Periodenlänge unterscheiden.

13. Radarsensor nach einem der Ansprüche 1 bis 12, ausgebildet als Dopplerradar.

## Claims

1. Radar sensor having
- an antenna arrangement (40) having multiple antenna elements (41) arranged next to one another, which are connected in series with one another via a delay line (42), and at least one feed point (431, 43r) on an outer antenna element (41), and
- at least two transmission and reception units (20), each for producing and evaluating a radar signal at a prescribed frequency,
wherein
- the transmission and reception units (20) are designed for the FMCW mode of operation,
- the at least two transmission and reception units (20) are connected to the at least one feed point (431, 43r) of the antenna arrangement (40), and
- the frequencies of the superposable radar signals from the at least two transmission and reception units (20) are prescribeable independently of one another.

2. Radar sensor according to Claim 1, in which the at least two transmission and reception units (20) are permanently connected to the antenna arrangement (40) via a distributor (30).

3. Radar sensor according to Claim 2, in which the distributor (30) is a Wilkinson radio-frequency distributor.

4. Radar sensor according to Claim 2, in which the distributor (30) is a hybrid radio-frequency distributor.

5. Radar sensor according to one of Claims 1 to 4, in which the antenna arrangement (40) has two feed points (431, 43r), wherein all transmission and reception units (20) are connected to one of the feed points (431, 43r) and the other feed point (43r, 431) is terminated with a terminating element (44).

6. Radar sensor according to one of Claims 1 to 4, in which the antenna arrangement (40) has two feed points (431, 43r) and two distributors (301, 30r), wherein each of the two distributors (301, 30r) is connected to one of the feed points (431, 43r) and to at least one transmission and reception unit (20).

7. Radar sensor according to one of Claims 1 to 6, in which the delay lines (42) are designed such that a radar signal emitted by the antenna arrangement (42) is directional, the main beam direction being dependent on the frequency of the radar signal.

8. Radar sensor according to one of Claims 1 to 7, in which each of the transmission and reception units (20) has a radio-frequency generator (21) for producing the radar signal and in which a received radar signal is mixed with the signal produced by the radio-frequency generator (21) for the purpose of evaluating said received radar signal.

9. Radar sensor according to one of Claims 1 to 8, in which a transmission and reception unit (20) is operable at a constant frequency.

10. Radar sensor according to one of Claims 1 to 9, in which the radar signal from at least one transmission and reception unit (20) is frequency-modulated for the purpose of changing the main beam direction and/or for the purpose of distance determination.

11. Radar sensor according to Claim 10, in which the frequency modulation is a ramp-shaped or sawtooth-shaped modulation that is used for changing the main beam direction and for distance determination.

12. Radar sensor according to Claim 10, in which the frequency modulation is made up of a first and a second ramp-shaped or sawtooth-shaped modulation, which differ in their frequency swing and/or their period length.

13. Radar sensor according to one of Claims 1 to 12, designed as a Doppler radar.

## Revendications

1. Capteur radar, comprenant
- un arrangement d'antenne (40) pourvu de plusieurs éléments d'antenne (41) disposés les uns à côté des autres, lesquels sont reliés en série entre eux par des lignes à retard (42), et au moins un point d'alimentation (431, 43r) sur un élément d'antenne (41) extérieur, et
- au moins deux unités d'émission et de réception (20), respectivement destinées à générer et à interpréter un signal radar à une fréquence prédéfinie,
- les unités d'émission et de réception (20) étant configurées pour le mode de fonctionnement FMCW,
- les au moins deux unités d'émission et de réception (20) étant reliées à l'au moins un point d'alimentation (431, 43r) de l'arrangement d'antenne (40) et
- les fréquences des signaux radar superposables des au moins deux unités d'émission et de réception (20) pouvant être prédéfinies indépendamment l'une de l'autre.

2. Capteur radar selon la revendication 1, avec lequel les au moins deux unités d'émission et de réception (20) sont reliées en permanence à l'arrangement d'antenne (40) par le biais d'un diviseur (30).

3. Capteur radar selon la revendication 2, avec lequel le diviseur (30) est un diviseur à haute fréquence de Wilkinson.

4. Capteur radar selon la revendication 2, avec lequel le diviseur (30) est un diviseur à haute fréquence hybride.

5. Capteur radar selon l'une des revendications 1 à 4, avec lequel l'arrangement d'antenne (40) possède deux points d'alimentation (431, 43r), toutes les unités d'émission et de réception (20) étant reliées à l'un des points d'alimentation (431, 43r) et les autres points d'alimentation (43r, 431) étant terminés par un élément de terminaison (44).

6. Capteur radar selon l'une des revendications 1 à 4, avec lequel l'arrangement d'antenne (40) possède deux points d'alimentation (431, 43r) et deux diviseurs (301, 30r), l'un des deux diviseurs (301, 30r) étant relié à l'un des points d'alimentation (431, 43r) et à au moins une unité d'émission et de réception (20).

7. Capteur radar selon l'une des revendications 1 à 6, avec lequel les lignes à retard (42) sont conçues de telle sorte qu'un signal radar diffusé par l'arrangement d'antenne (42) est dirigé, la direction du rayonnement principal étant dépendante de la fréquence du signal radar.

8. Capteur radar selon l'une des revendications 1 à 7, avec lequel chacune des unités d'émission et de réception (20) possède un générateur de haute fréquence (21) destiné à générer le signal radar, et avec lequel un signal radar reçu est mélangé avec le signal généré par le générateur de haute fréquence (21) en vue de son interprétation.

9. Capteur radar selon l'une des revendications 1 à 8, avec lequel une unité d'émission et de réception (20) peut fonctionner avec une fréquence constante.

10. Capteur radar selon l'une des revendications 1 à 9, avec lequel le signal radar d'au moins une unité d'émission et de réception (20) est modulé en fréquence en vue de modifier la direction du rayonnement principal et/ou en vue de déterminer la distance.

11. Capteur radar selon la revendication 10, avec lequel la modulation de fréquence est une modulation en forme de rampe ou de dents de scie qui sert à modifier la direction du rayonnement principal et à déterminer la distance.

12. Capteur radar selon la revendication 10, avec lequel la modulation de fréquence se compose d'une première et d'une deuxième modulation en forme de rampe ou de dents de scie qui se différencient au niveau de leur excursion de fréquence et/ou de leur longueur de période.

13. Capteur radar selon l'une des revendications 1 à 12, réalisé sous la forme d'un radar Doppler.
